# EUROPEAN PATENT APPLICATION

(11) **EP 2 627 135 A1**
(43) Date of publication of application: **14.08.2013**
(21) Application number: 13166796.6
(22) Date of filing: 18.09.2009
(51) Int. Cl.: H04W 60/04, H04L 29/08, H04W 4/02, H04W 4/20

(54) **Method and communications network for providing services in relation to a mobile device**

(62) Divisional of application: 09170677.0
(71) Applicant: Vodafone Holding GmbH, 40549 Düsseldorf (DE)
(72) Inventor: Birle, Christian, 80799 Munich (DE)
(74) Representative: Müller & Schubert

(57) **Abstract**

The present invention relates to a method of developing a cellular communications network (10) for providing services in relation to at least one mobile device, a method of providing services in relation to at least one mobile device which passes through a cellular communications network (10), as well as to a cellular communications network (10). Cellular communications network (10) comprises a number of location-areas (11, 20), each location-area (11, 20) comprising at least one cell (12, 21), wherein a location-update procedure is performed by the time said mobile device (41, 42, 43) passes from one location-area (11) into another location-area (20). Cellular communications network (10) further comprises at least one sub-location-area (30) within at least one location-area (20), said sub-location-area (30) being linked to at least one service and said service being adapted to be performed in relation to the at least one mobile device. In order to enable services to be operated with less technical and evaluation expenditure, the following is suggested: a) by the time a mobile device enters from location-area (20) into sub-location-area (30) and by the time said mobile device exits out from sub-location-area (30) back into location-area (20), a location-update procedure is performed, b) when performing a location-update procedure by the time a mobile device enters into and/or exits out of said sub-location-area (30), the service linked to said sub-location-area (30) is activated.

## Description

The present invention relates to the provision of services in relation to mobile devices within a communications network, and more particularly to a method of developing a communications network for providing services in relation to at least one mobile device which passes through said cellular communications network according to the preamble of claim 1, a method of providing services in relation to at least one mobile device which passes through a cellular communications network according to the preamble of claim 2 and to a cellular communications network.

Various solutions for providing services in relation to at least one mobile device which passes through a cellular communications network are already known in the prior art.

From WO 03/077574 A1 a solution has become known, which relates to a method for the location-dependent mobile communication of users of an information-transmission system, whereby each user is associated at least temporarily with at least one mobile terminal device, whereby one or more users/senders produce electronic information data and said information data is transmitted to at least one central unit by means of the terminal device(s) associated therewith, in order to automatically determine the location of the respective terminal device(s) from which the information is transmitted by means of a location-determining method. The information data is automatically linked to the determined location-data in the central unit and the information data is made available in a location-based manner by the central unit in such a way that said location-based information data is made available by the central unit for at least one other user of the information-transmission system if the same location and/or a location in the vicinity of the location of the terminal device of the user(s) or sender(s) via which the information is stored, has been determined.

Accurate location information about a mobile device is already used in connection with various services. For example, location information can be used to generate advertising content responsive to a user approaching the location of a business. Such a solution has been suggested in US 2002/0102993 A1, wherein advertising content is tailored to the user's preferences and the particular business involved. Once, the advertising content is delivered, the position of the user is monitored to track the effectiveness of the advertisement. If the user enters the business' store and/or makes a purchase, the advertisement is logged as having been successful.

A similar solution is disclosed in US 2005/0049765 A1. This document describes a solution wherein advertisements are transmitted from a head end to a device associated with a user through a Global Positioning System (GPS). The device also transmits locational and temporal information back to the head end. The known solution gathers data pertaining to the effectiveness of advertisements being communicated to the user, for example, it can be determined if the user visited the advertised business premises after listening to or watching a particular advertisement.

However, all of these known solutions require that location-data of the mobile devices are determined by use of a separate location-determining method.

It is the object of the present invention to provide a method and a communications network which enable to operate services in relation to at least one mobile device which passes through a cellular communications network with less technical and evaluation expenditure.

In accordance with the present invention, this object is solved by the method with the features of independent claim 1, the method with the features of independent claim 2 as well as the communications network with the features of independent claim 14.

Additional features and details become apparent from the dependent claims, from the description and from the drawings. Features and details described in connection with the method according to the first aspect of the invention are, of course, also valid in connection with the method according to the second aspect of the invention, and vice versa. Features and details described in connection with the method according to the first and second aspect of the invention are, of course, also valid in connection with the communications network according to the third aspect of the third aspect of the present invention, and vice versa. Thus, in respect of the disclosure of one of the aspects of the invention, full reference is always made reciprocally to the disclosure of each other aspect of the invention.

The present invention enables to generate information in free accessible areas. This information can, for example, be used in the field of commercial evaluation of actions, such as advertising or the like. The present invention is based on the principle of location-area-updates within a cellular communications network, such as a mobile telecommunications network. In particular, the present invention is also based on the assumption that nowadays most of the population is equipped with a mobile device such as a mobile phone or the like. If a mobile device passes from one location-area into another, for example adjacent, location-area, the mobile device performs a so called location-area-update, also referred to as location-update procedure hereinafter. The size of a location-area generally depends on the geographical area and/or the number of users and/or the amount of traffic.

Pursuant to a first aspect of the present invention a method is provided for developing a cellular communications network for providing services in relation to at least one mobile device which passes through said cellular communications network, said cellular communications network comprising a number of location-areas, each location-area comprising at least one cell, wherein a location-update procedure is performed by the time a mobile device passes from one location-area into another location-area. That means the mobile device exits out of one location area and enters another - preferably adjacent - location-area. This method is characterized in that at least one sub-location-area is generated within at least one location-area, and that the sub-location-area is linked to at least one service, said service being adapted to be performed in relation to the at least one mobile device.

The method is performed within a cellular communications network. This communications network, which is adapted for providing services in relation to at least one mobile device which passes through said cellular communications network, is modified in a specific manner.

However, the present invention is not limited to specific types of communications networks. In a preferred embodiment the communications network is a mobile telecommunications network. In such a case the mobile device can be a mobile phone.

The cellular communications network comprises a number of location-areas. Within a cellular communications network a location-area indicates the current whereabouts of a mobile device within said communications network. The geographical size of a location-area can vary. A location-area is defined by a so called location-area-identity. The location-area-identity generally comprises a mobile country code, a mobile network code and a location-area code.

Each location-area comprises at least one cell. Preferably, each location-area comprises more than one cell. The cells within one location-area are often controlled by the same base station controller. Generally speaking, a cellular communications network is divided into a number of cells, radio cells in the case of a mobile telecommunications network. Those cells are combined in groups. A group of cells is referred to as a location-area. Thus, a location-area is the logical combination of a number of adjacent cells within a communications network. The number of cells within one location-area is variable. For the purposes of the present invention it is sufficient, if a location-area comprises at least one cell.

If a mobile device is run in the so called idle-mode, which means that no connection to another mobile device is active, the location-area generally provides the position related information relating to the mobile device within the communications network.

By the time a mobile device passes from one location-area into another location-area, a location-update procedure is performed. That means the communications network gets the information that the mobile device has passed from one cell within one location-area into a cell of another, usually adjacent, location-area and that the mobile device now is located within the other location-area. If a mobile device passes from one cell into another cell within the same location-area no location-update procedure is performed. In particular, a location-area is the smallest addressable area, wherein a mobile device can be contacted by way of paging. Generally speaking, a location-update procedure combines all technical steps, which are required to allow a mobile device a new location within the communications network.

A location-area, in which a mobile device is currently located, can be used as location information. A current location-area, which is associated to a mobile device, can preferably be stored within a central processing unit, for example a server being associated to the communications network.

In accordance with the present invention, at least one sub-location-area is - at least temporarily - generated within at least one location-area. In particular, a sub-location-area is a geographical sub-region within a location-area. In particular, a sub-location-area is geographically smaller than the location-area, in which said sub-location-area is located. Each sub-location-area preferably comprises its own, unique location-area identity. Preferably, each sub-location-area comprises the same features and functional elements like a location-area and it functions like a location-area as well. Thus, it is possible to optimize the necessary administrative expenditure, for example during a paging procedure. Due to the generation of geographically limited sub-location-areas it becomes possible to generate information with regard to those mobile devices which are located within said sub-location-area. The size of those sub-location-areas preferably depends on their application purposes.

Furthermore, the sub-location-area is linked to at least one service, said service being adapted to be performed in relation to the at least one mobile device. Examples of preferred services, which, however, do not limit the scope of the present invention, are described further below.

The method according to this first aspect of the present invention describes an innovative possibility to modify an existing communications network, in order to enable special services.

According to a second aspect of the invention a method is provided of providing services in relation to at least one mobile device which passes through a cellular communications network, said cellular communications network comprising a number of location-areas, each location-area comprising at least one cell, said cellular communications network further comprising at least one sub-location-area within at least one location-area, said sub-location-area being linked to at least one service and said service being adapted to be performed in relation to the at least one mobile device, wherein a location-update procedure is performed by the time said mobile device enters into and/or exits out of said sub-location-area. This method is characterized in that when performing a location-update procedure with regard to the sub-location-area the service linked to said sub-location-area is activated.

Preferably, by the time the mobile device passes within the location-area, wherein sub-location-area is located, from the outside of sub-location-area into sub-location-area, and by the time the mobile device passes from sub-location-area back into location-area outside of sub-location-area, a location-update procedure is performed.

In such a case, the service linked to the sub-location-area can be activated by the time the mobile device enters the sub-location-area and/or by the time the mobile device leaves or exits out of the sub-location-area. Preferably, the service linked to the sub-location-area is activated, when a location-update procedure is performed by the time the mobile device passes within the location-area, wherein sub-location-area is located, from the outside of sub-location-area into sub-location-area, and/or by the time the mobile device passes from sub-location-area back into location-area outside of sub-location-area, that is when the mobile device enters into and/or exits out of said sub-location-area.

Furthermore, the present invention relates to a method for providing services in relation to at least one mobile device which passes through a cellular communications network, said cellular communications network comprising a number of location-areas, each location-area comprising at least one cell, wherein a location-update procedure is performed by the time said mobile device passes from one location-area into another location-area, said cellular communications network further comprising at least one sub-location-area within at least one location-area, said sub-location-area being linked to at least one service and said service being adapted to be performed in relation to the at least one mobile device. This method is characterized by the following steps: a) by the time the mobile device passes from the location-area into the sub-location-area and by the time said mobile device passes from said sub-location-area back into said location-area, a location-update procedure is performed, b) when performing a location-update procedure by the time the mobile device passes from the location-area into the sub-location-area and/or by the time said mobile device passes from said sub-location-area back into said location-area, the service linked to said sub-location-area is activated.

With regard to the configuration and the operating mode of the method pursuant to this second aspect of the invention, full reference is also made to the aforementioned disclosure of the method according to the first aspect of the invention.

Preferably, in a preceding step the communications network is developed by use of a method according to the first aspect of the present invention.

In accordance with the present invention the method can be used for various types of services.

According to one preferred embodiment of a service, the number of mobile devices within the sub-location-area and/or the time of stay of the at least one mobile device within the sub-location-area is detected and evaluated. Each time, a mobile devices passes from a location-area into said sub-location area or passes from said sub-location-area back into said location-area, a location-update procedure is performed. The delta between two subsequent location-update procedures relating to said sub-location-area gives a hint, how many mobile devices and/or how long a mobile device has stayed within said sub-location-area. Preferably, such information can be used for statistical purposes, for example in connection with advertising, or the like. For example, it is possible by means of the percentage an operator of a communications network keeps on the entire number of users and by means of the average degree of penetration of mobile devices within the population to extrapolate information gathered by the method according to the present invention on the entire population.

According to another preferred embodiment, the service is provided as a location based service. In this case, the sub-location-area is linked to a location based service. Preferably, a location based service is an information and/or entertainment service, which is accessible with mobile devices through the communications network. A location based service makes use of the geographical position of the mobile device. Location based services can be used in a variety of contexts. The present invention is not limited to specific types of location based services. For example, it is possible to use such services in the field of advertising. If such a service is linked to a sub-location-area and if a mobile device enters said sub-location-area, the services will be activated upon the performance of the location-update procedure. For example, the user can get a message on his mobile device.

Preferably, the location based service is automatically provided to the mobile device, so called push-procedure. During said push-procedure the location based service is automatically activated, by the time the mobile device enters the sub-location-area and a location-update procedure is performed.

According to another embodiment, the so called pull-procedure, the location based service is requested by the mobile device. Upon request, the location based service is provided to the mobile device. In this case, the location based service is not automatically provided to the mobile device.

Advantageously, the location-update relating to said sub-location-area functions as a trigger for activating the service.

Preferably, the sub-location-area is generated or arranged as a geographically limited area. However, the present invention is not limited to specific sizes or configurations of sub-location-areas. Examples of preferred embodiments, which however do not limit the scope of the present invention, are described in the following:

For example, the sub-location-area is generated or arranged as a cell or in the form of a cell, particularly in the form of a macrocell, or a microcell, or a picocell, or a femtocell. Preferably, the sub-location-area comprises one single cell. For example, a macrocell provides the main coverage in a cellular communications network. A microcell provides a more localised coverage than a macrocell. For example, microcells provide coverage and additional capacity, where there are high numbers of users within macrocells. A picocell or a femtocell provides more localised coverage than a microcell. Preferably, picocells and femtocells can be found at places with high numbers of users, such as shopping centers, train stations, bus stations, airports or the like. In particular, a femtocell is a small cellular base station, which can, for example, be designed for use in a geographically limited area. A femtocell can connect to a service provider's network via broadband for example. Preferably, a femtocell only supports a limited number of mobile devices.

According to a third aspect of the present invention, a cellular communications network, particularly a mobile telecommunications network, is provided, said cellular communications network comprising a number of location-areas, each location-area comprising at least one cell; means for generating at least one sub-location-area within at least one location-area; means for performing a location-update procedure by the time a mobile device passes from one location-area into another location-area; means for performing a location-update procedure by the time the mobile device passes within the location-area, wherein sub-location-area is located, from the outside of sub-location-area into sub-location-area, and by the time the mobile device passes from sub-location-area back into location-area outside of sub-location-area; means for linking the sub-location-area to at least one service; and means for activating the service being linked to the sub-location-area when performing a location-update procedure with regard to the sub-location-area. Preferably, the service is activated if the mobile device enters into and/or exits out of the sub-location-area.

Furthermore, the present invention relates to a cellular communications network, particularly to a mobile telecommunications network, said cellular communications network comprising a number of location-areas, each location-area comprising at least one cell, means for performing a location-update procedure by the time a mobile device passes from one location-area into another location-area, means for generating at least one sub-location-area within at least one location-area; means for performing a sub-location-update procedure by the time the mobile device passes from the location-area into the sub-location-area and by the time said mobile device passes from said sub-location-area back into said location-area, means for linking the sub-location-area to at least one service, and means for activating the service being linked to the sub-location-area when performing a sub-location-update by the time the mobile device passes from the location-area into the sub-location-area and/or by the time said mobile device passes from said sub-location-area back into said location-area.

With regard to the configuration and the operating mode of the communications network pursuant to this third aspect of the invention, full reference is made to the aforementioned disclosure of the methods according to the first and second aspect of the invention.

Advantageously, the cellular communications network is characterized by means for performing the above described methods according to the present invention.

The present invention particularly relates to a method of developing a cellular communications network for providing services in relation to at least one mobile device, a method of providing services in relation to at least one mobile device which passes through a cellular communications network, as well as to a cellular communications network. Cellular communications network comprises a number of location-areas, each location-area comprising at least one cell, wherein a location-update procedure is performed by the time said mobile device passes from one location-area into another location-area. Cellular communications network further comprises at least one sub-location-area within at least one location-area, said sub-location-area being linked to at least one service and said service being adapted to be performed in relation to the at least one mobile device. In order to enable services to be operated with less technical and evaluation expenditure, the following is suggested: a) by the time a mobile device enters from location-area into sub-location-area and by the time said mobile device exits out from sub-location-area back into location-area, a location-update procedure is performed, b) when performing a location-update procedure by the time a mobile device enters into and/or exits out of said sub-location-area, the service linked to said sub-location-area is activated.

For a better understanding of the present invention a method of providing services in relation to at least one mobile device which passes through a cellular communications network as well as a cellular communications network, embodying the present invention, will now be described by way of example, with reference to the accompanying drawings. Shown is in
- Figure 1: a schematic view of a cellular communications network in accordance with the present invention, which is traversed by a mobile device:
- Figure 2: a schematic view of a sub-location-area within said cellular communications network.

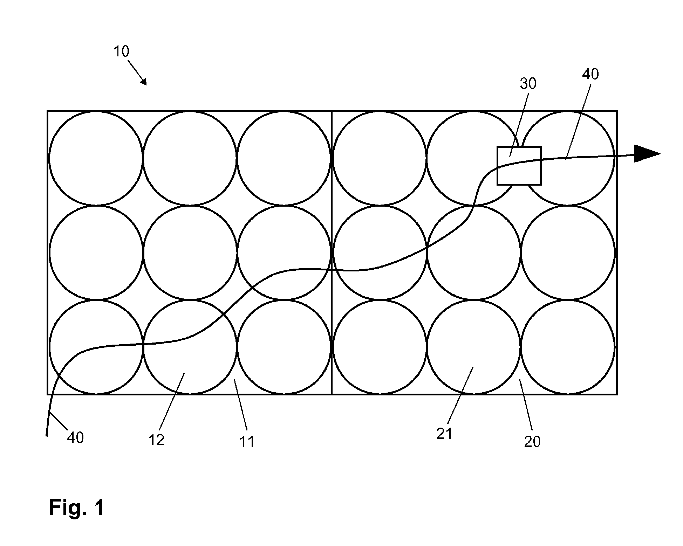

In Figure 1 a cellular communications network 10 is depicted, said communications network being embodied as a mobile telecommunications network. Communications network 10 comprises a number of location-areas 11, 20. For clarity reasons, only two location-areas are shown in Figure 1. Each location-area 11, 20 comprise a number of cells 12, 21.

By the time, a mobile device, which passes on pathway 40 through said communications network 10, leaves location-area 11 and enters location-area 20 a location-update procedure is performed.

Location-area 20 further comprises at least one sub-location-area 30. This sub-location-area 30 represents a geographically limited area within location-area 20. The sub-location-area 30 is linked to at least one service. This service is adapted to be performed in relation to the at least one mobile device. By the time a mobile device passes from location-area 20 into sub-location-area 30 and by the time said mobile device passes from sub-location-area 30 back into location-area 20, a location-update procedure is performed. When performing a location-update procedure by the time the mobile device passes from location-area 20 into sub-location-area 30 and/or by the time said mobile device passes from sub-location-area 30 back into location-area 20, the service linked to sub-location-area 30 is activated.

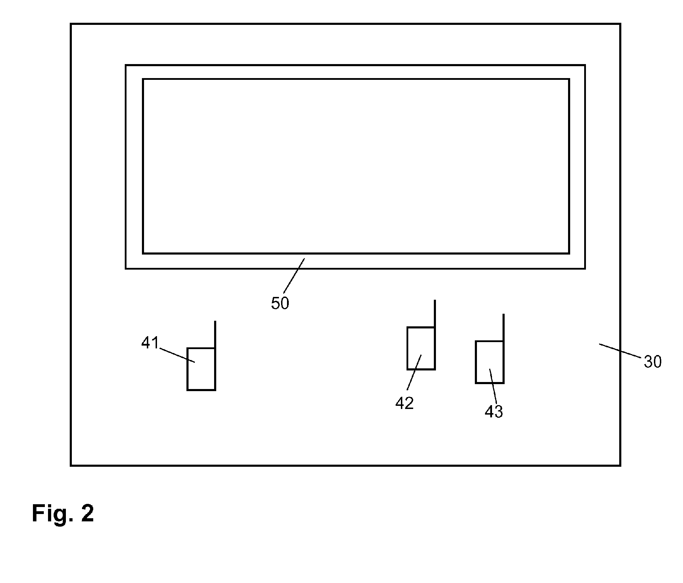

This is shown in greater detail in connection with Figure 2. Figure 2 depicts sub-location-area 30 which is shown in Figure 1. Sub-location-area 30 is provided in the size of a picocell or a femtocell and surrounds an advertising space 50. According to one preferred embodiment of a service, the number of mobile devices 41, 42, 43 within sub-location-area 30 and/or the time of stay of mobile devices 41, 42, 43 within sub-location-area 30 are detected and evaluated. Each time, a mobile device 41, 42, 43 passes from location-area 20 into sub-location area 30 or passes from sub-location-area 30 back into location-area 20, as shown in Figure 1, a location-update procedure is performed. The delta between two subsequent location-update procedures relating to sub-location-area 30 gives a hint on how many mobile devices 41, 42, 43 and/or how long a mobile device 41, 42, 43 has stayed within sub-location-area 30. Preferably, such information can be used for statistical purposes, for example in connection with advertising. Thus, it is possible to determine, how long the users of mobile devices 41, 42, 43 have rested in front of advertising space 50.

According to another preferred embodiment, the service is provided as a location based service. In this case, sub-location-area 30 is linked to a location based service. If a mobile device 41, 42, 43 enters sub-location-area 30, the services will be activated upon the performance of the sub-location-update procedure. For example, the user can get an advertising message on his mobile device 41, 42, 43.

### List of reference numerals

| | |
|---|---|
| 10 | communications network (mobile telecommunications network) |
| | |
| 11 | location-area |
| 12 | cell |
| | |
| 20 | location-area |
| 21 | cell |
| | |
| 30 | sub-location-area |
| | |
| 40 | pathway of a mobile device (mobile phone) through a communications network |
| 41 | mobile device (mobile phone) |
| 42 | mobile device (mobile phone) |
| 43 | mobile device (mobile phone) |
| | |
| 50 | advertising space |

## Claims

1. A method of developing a cellular communications network (10) for providing services in relation to at least one mobile device (41, 42, 43) which passes through said cellular communications network (10), said cellular communications network (10) comprising a number of location-areas (11, 20), each location-area (11, 20) comprising at least one cell (12, 21), wherein a location-update procedure is performed by the time a mobile device (41, 42, 43) passes from one location-area (11) into another location-area (20), **characterized in that** at least one sub-location-area (30) is generated within at least one location-area (20), and that the sub-location-area (30) is linked to at least one service, said service being adapted to be performed in relation to the at least one mobile device (41, 42, 43).

2. A method of providing services in relation to at least one mobile device (41, 42 43) which passes through a cellular communications network (10), said cellular communications network (10) comprising a number of location-areas (11, 20), each location-area (11, 20) comprising at least one cell (12, 21), said cellular communications network (10) further comprising at least one sub-location-area (30) within at least one location-area (20), said sub-location-area (30) being linked to at least one service and said service being adapted to be performed in relation to the at least one mobile device (41, 42, 43), wherein a location-update procedure is performed by the time said mobile device (41, 42, 43) enters into and/or exits out of said sub-location-area (30), **characterized in that** when performing a location-update procedure with regard to the sub-location-area (30) the service linked to said sub-location-area (30) is activated.

3. The method according to claim 2, **characterized in that** by the time the mobile device (41, 42, 43) passes within the location-area (20), wherein sub-location-area (30) is located, from the outside of sub-location-area (30) into sub-location-area (30), and by the time the mobile device (41, 42, 43) passes from sub-location-area (30) back into location-area (20) outside of sub-location-area (30), a location-update procedure is performed.

4. The method according to anyone of claims 2 or 3, **characterized in that** the service linked to the sub-location-area (30) is activated, when a location-update procedure is performed by the time the mobile device (41, 42, 43) passes within the location-area (20), wherein sub-location-area (30) is located, from the outside of sub-location-area (30) into sub-location-area (30), and/or by the time the mobile device (41, 42, 43) passes from sub-location-area (30) back into location-area (20) outside of sub-location-area (30).

5. The method according to anyone of claims 2 to 4, **characterized in that** in a preceding step the communications network (10) is developed pursuant to a method according to claim 1.

6. The method according to anyone of claims 2 to 5, **characterized in that** as a service the number of mobile devices (41, 42, 43) within the sub-location-area (30) and/or the time of stay of the at least one mobile device (41, 42, 43) within the sub-location-area (30) is detected and evaluated.

7. The method according to anyone of claims 2 to 6, **characterized in that** the sub-location-area (30) is linked to a location based service.

8. The method according to claim 7, **characterized in that** the location based service is automatically provided to the mobile device (41, 42, 43).

9. The method according to claim 7, **characterized in that** the location based service is requested by the mobile device (41, 42, 43) and that said location based service is provided to the mobile device (41, 42, 43) upon request.

10. The method according to anyone of claims 1 to 9, **characterized in that** the location-update functions as a trigger for activating the service.

11. The method according to anyone of claims 1 to 10, **characterized in that** the sub-location-area (30) is generated or arranged as a geographically limited area.

12. The method according to claim 11, **characterized in that** the sub-location-area (30) is generated or arranged as a cell or in the form of a cell, particularly in the form of a macrocell or a microcell or a picocell or a femtocell.

13. The method according to anyone of claims 1 to 12, **characterized in that** the communications network (10) is a mobile telecommunications network and that the mobile device (41, 42, 43) is a mobile phone.

14. A cellular communications network (10), particularly a mobile telecommunications network, said cellular communications network (10) comprising a number of location-areas (11, 20), each location-area (11, 20) comprising at least one cell (12, 21); means for generating at least one sub-location-area (30) within at least one location-area (20); means for performing a location-update procedure by the time a mobile device (41, 42, 43) passes from one location-area (11) into another location-area (20); means for performing a location-update procedure by the time the mobile device (41, 42, 43) passes within the location-area (20), wherein sub-location-area (30) is located, from the outside of sub-location-area (30) into sub-location-area (30), and by the time the mobile device (41, 42, 43) passes from sub-location-area (30) back into location-area (20) outside of sub-location-area (30); means for linking the sub-location-area (30) to at least one service; and means for activating the service being linked to the sub-location-area (30) when performing a location-update procedure with regard to the sub-location-area (30).

15. The cellular communications network according to claim 14, **characterized by** means for performing the method according to anyone of claims 1 to 13.
